(19) 

Europäisches Patentamt

European Patent Office

Office européen des brevets

(11) **EP 4 292 984 B1**

(12) **EUROPEAN PATENT SPECIFICATION**

(45) Date of publication and mention of the grant of the patent:
**14.01.2026 Bulletin 2026/03**

(21) Application number: **22766892.8**

(22) Date of filing: **28.02.2022**

(51) International Patent Classification (IPC):
*C01G 33/00* (2006.01)  *H01M 4/13* (2010.01)
*H01M 4/485* (2010.01)  *H01M 4/62* (2006.01)

(52) Cooperative Patent Classification (CPC):
**H01M 4/485; C01G 33/00; C01G 33/006;**
C01P 2002/60; C01P 2002/72; C01P 2002/76;
C01P 2004/61; H01M 2004/028; Y02E 60/10

(86) International application number:
**PCT/JP2022/008325**

(87) International publication number:
**WO 2022/190933 (15.09.2022 Gazette 2022/37)**

(54) **ELECTRODE ACTIVE MATERIAL FOR ELECTROCHEMICAL ELEMENTS, ELECTRODE MATERIAL FOR ELECTROCHEMICAL ELEMENTS, ELECTRODE FOR ELECTROCHEMICAL ELEMENTS, ELECTROCHEMICAL ELEMENT, AND MOBILE OBJECT**

ELEKTRODENAKTIVMATERIAL FÜR ELEKTROCHEMISCHE ELEMENTE, ELEKTRODENMATERIAL FÜR ELEKTROCHEMISCHE ELEMENTE, ELEKTRODE FÜR ELEKTROCHEMISCHE ELEMENTE, ELEKTROCHEMISCHES ELEMENT UND MOBILOBJEKT

MATÉRIAU ACTIF D'ÉLECTRODE POUR ÉLÉMENTS ÉLECTROCHIMIQUES, MATÉRIAU D'ÉLECTRODE POUR ÉLÉMENTS ÉLECTROCHIMIQUES, ÉLECTRODE POUR ÉLÉMENTS ÉLECTROCHIMIQUES, ÉLÉMENT ÉLECTROCHIMIQUE ET OBJET MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.03.2021 JP 2021039035**

(43) Date of publication of application:
**20.12.2023 Bulletin 2023/51**

(73) Proprietor: **Maxell, Ltd.**
**Kyoto 618-8525 (JP)**

(72) Inventors:
• **TOMITA, Kentaro**
**Otokuni-gun, Kyoto 618-8525 (JP)**
• **KAMIZORI, Haruki**
**Otokuni-gun, Kyoto 618-8525 (JP)**

(74) Representative: **Diehl & Partner**
**Patent- und Rechtsanwaltskanzlei mbB**
**Erika-Mann-Straße 9**
**80636 München (DE)**

(56) References cited:
**EP-A1- 3 556 732**    **JP-A- 2011 108 540**
**JP-A- 2016 177 972**    **JP-A- 2018 163 870**
**JP-A- 2019 057 371**    **JP-A- 2020 031 055**

**Description**

Technical Field

The present invention relates to an electrochemical element having excellent load characteristics, an electrode active material, an electrode material, and an electrode that can constitute the electrochemical element, and a movable body including the electrochemical element.

Background Art

Nonaqueous electrolyte secondary batteries, which are one type of electrochemical elements, are used as power sources of portable electronic devices such as cellular phones and laptop personal computers, and electric vehicles. As these devices are downsized and their functionality is improved, there is demand for smaller and lighter nonaqueous electrolyte secondary batteries having a high capacity and a high energy density.

In existing nonaqueous electrolyte secondary batteries, a lithium-containing complex oxide is commonly used as a positive-electrode active material, and graphite or the like is commonly used as a negative-electrode active material.

Also, an attempt to use spinel-type lithium titanate ($Li_4Ti_5O_{12}$) as the negative-electrode active material has been made to produce a battery that can be charged and discharged at a large current value without causing an internal short circuit due to deposition of lithium on the negative electrode, for example. However, there is a problem in that the theoretical capacity [175 mAh/g (600 mAh/cm$^3$)] of lithium titanate is small compared with the theoretical capacity [372 mAh/g (830 mAh/cm$^3$)] of graphite.

Therefore, studies have been made in recent years to apply an oxide of niobium and other metal, such as a niobium -titanium complex oxide, as a negative-electrode active material that has a larger capacity than lithium titanate (Patent Documents 1 and 2 and Non-Patent Document 1, for example).

Patent Document 1 describes realizing a nonaqueous electrolyte battery having excellent input-output characteristics and cycle characteristics by adding a specific amount of Mo, V, or W into a monoclinic niobium-titanium complex oxide and setting an aspect ratio of primary particles and a crystallite size of the complex oxide within specific ranges.

Patent Document 2 describes improving charge-discharge cycle characteristics of a secondary battery by setting a rate of a crystallite diameter relating to the (020) plane to an average primary particle diameter of particles having a crystal structure belonging to a monoclinic niobium-titanium complex oxide to a specific value.

Note that, in a niobium complex oxide, a crystallite diameter relating to the (020) plane corresponds to a crystallite size in the b-axis direction. According to Non-Patent Document 1, a diffusion rate of Li ions in a niobium complex oxide is higher in the b-axis direction than in the a-axis direction, for example.

Citation List

Patent Documents

Patent Document 1: JP 2016-177972A
Patent Document 2: JP 2019-57371A

Non-Patent Documents

Non-Patent Document 1: Journal of the American Chemical Society, 2019, vol. 141, pp. 16706-16725

Summary of Invention

Problem to be Solved by the Invention

As described above, when a niobium complex oxide is used as an active material, lithium is unlikely to be deposited on the negative electrode even when the battery is charged and discharged at a large current value, and accordingly, improvement in load characteristics of the electrochemical element such as a nonaqueous electrolyte secondary battery can be expected. However, there is demand for further improvement in the load characteristics of electrochemical elements to keep pace with expected further development of devices to which electrochemical elements are applied.

The present invention was made in view of the above circumstances, and has an object of providing an electrochemical element having excellent load characteristics, an electrode active material, an electrode material, and an electrode that can constitute the electrochemical element, and a movable body including the electrochemical element.

Means for Solving Problem

An electrode active material for an electrochemical element according to the present invention is a monoclinic niobium complex oxide represented by the general formula (1) disclosed in claim 1 and Db/Da is 1.5 or more and 10 or less, where Da is a crystallite size in an a-axis direction, and Db is a crystallite size in a b-axis direction.

An electrode material for an electrochemical element according to the present invention includes the electrode active material for an electrochemical element according to the present invention.

An electrode for an electrochemical element according to the present invention includes the electrode active material for an electrochemical element according to the present invention or the electrode material for an electrochemical element according to the present invention.

An electrochemical element according to the present invention includes a positive electrode and a negative electrode, and either one of the positive electrode and the negative electrode is the electrode for an electrochemical element according to the present invention.

A movable body according to the present invention includes the electrochemical element according to the present invention.

Effects of the Invention

According to the present invention, it is possible to provide an electrochemical element having excellent load characteristics, an electrode active material, an electrode material, and an electrode that can constitute the electrochemical element, and a movable body including the electrochemical element.

Brief Description of Drawings

[FIG. 1] FIG. 1 is a schematic cross-sectional view showing an example of an electrochemical element according to the present invention.

[FIG. 2] FIG. 2 is a schematic plan view showing another example of the electrochemical element according to the present invention.

[FIG. 3] FIG. 3 is a cross-sectional view taken along line I-I in FIG. 2.

[FIG. 4] FIG. 4 is a graph showing a relationship between charging characteristics and discharging characteristics of flat-shaped all-solid-state secondary batteries of Examples 1 and 3 and Comparative Examples 1 and 2 and a ratio "Da/average particle diameter" between Da and an average particle diameter of niobium complex oxides used as negative-electrode active materials in the flat-shaped all-solid-state secondary batteries.

Disclosure of Invention

<Electrode Active Material for Electrochemical Element>

An electrode active material for an electrochemical element (hereinafter may be simply referred to as an "active material") according to the present invention is a monoclinic niobium complex oxide represented by the general formula (1) disclosed in claim 1 and a ratio Db/Da between a crystallite size Da in the a-axis direction and a crystallite size Db in the b-axis direction is 1.5 or more and 10 or less.

As described above, it is known that the diffusion rate of Li ions in a monoclinic niobium complex oxide is higher in the b-axis direction than in the a-axis direction, for example.

In common monoclinic niobium complex oxides, the crystallite size in the a-axis direction and the crystallite size in the b-axis direction are equivalent. However, through intensive studies, the inventors of the present invention found that the crystallite size Da in the a-axis direction can be made smaller than the crystallite size Db in the b-axis direction by controlling production conditions of a niobium complex oxide, and when a niobium complex oxide produced by adjusting Da and Db and setting the ratio Db/Da to 1.5 or more and 10 or less is used as an active material, a sufficient capacity of an electrochemical element can be obtained even when the electrochemical element is charged and discharged with a large current, and the load characteristics of the electrochemical element can be improved. The present invention was completed based on these findings.

In the monoclinic niobium complex oxide constituting the active material, Db/Da is 1.5 or more, preferably 1.7 or more, and more preferably 3.0 or more from the viewpoint of suppressing the crystallite size in the a-axis direction in which the diffusion rate of Li ions is relatively low, and thus increasing the diffusion rate of Li ions in the entire active material and enabling the active material to constitute an electrochemical element having excellent load characteristics.

Note that if Db/Da in the monoclinic niobium complex oxide constituting the active material is too large, the crystal structure may be unstable and reversibility at the time of charging and discharging may deteriorate. Therefore, Db/Da in the monoclinic niobium complex oxide constituting the active material is 10 or less, and more preferably 7.0 or less.

In the monoclinic niobium complex oxide constituting the active material, the crystallite size Da in the a-axis direction is preferably 5 nm or more, and more preferably 10 nm or more, and preferably 500 nm or less, and more preferably 100 nm or less. In the monoclinic niobium complex oxide constituting the active material, the crystallite size Db in the b-axis direction is preferably 7.5 nm or more, and more preferably 15 nm or more, and preferably 5000 nm or less, and more preferably 1000 nm or less.

For example, the monoclinic niobium complex oxide constituting the active material has a $ReO_3$ crystal structure and includes a crystal phase belonging to a space group (C2/m, A2/m) that has a $3 \times 4 \times \infty$ block structure or a space group I2/m that has a $3 \times 3 \times \infty$ block structure of a crystallographic shear structure. Preferably, the monoclinic niobium complex oxide has a $ReO_3$ crystal structure and includes a crystal phase belonging to a space group that has a $3 \times 4 \times \infty$ block structure of a crystallographic shear structure.

The niobium complex oxide constituting the active material of the present invention includes a complex oxide (niobium-aluminum complex oxide) represented by the following general formula (1).

$$M_xAl_{1-1.5x}Nb_{11+0.5x}O_{29-\delta} \qquad (1)$$

In the general formula (1), M is at least one element selected from Zn and Cu, and x and $\delta$ satisfy $0 \leq x \leq 0.4$ and $0 \leq \delta \leq 3$.

That is, the complex oxide satisfying the general formula (1) need not necessarily contain the element M, but may contain at least one of Zn and Cu as the element M. In the case where the complex oxide represented by the general formula (1) contains the element M, the amount x of the element M is preferably 0.05 or more from the viewpoint of enhancing an effect of improving the load characteristics of the electrochemical element. However, if the amount of the element M in the complex oxide represented by the general formula (1) is too large, stability of the crystal structure may deteriorate and the charge-discharge cycle characteristics of the electrochemical element may deteriorate. Therefore, from the viewpoint of obtaining good charge-discharge cycle characteristics of the electrochemical element, the amount x of the element M in the complex oxide represented by the general formula (1) is 0.4 or less, and more preferably 0.35 or less.

In the complex oxide represented by the general formula (1), $\delta$ relating to the amount of oxygen is determined in accordance with the valences of the element M and Nb in such a manner that the amounts (valences) of the element M, Nb, and Al that form positive ions match the amount (valence) of oxygen that forms negative ions. Specifically, $\delta$ is 0 or more and 3 or less.

Note that oxygen deficiency may occur (that is, $\delta$ in the general formula (1) may be larger than 0) due to coexistence of pentavalent Nb and tetravalent Nb in the complex oxide represented by the general formula (1), but it was found that the effect of improving the load characteristics of the electrochemical element is enhanced when Cu is contained as the element M, for example, although the reason for this is not clear.

It is also possible to use a niobium-titanium complex oxide such as $TiNb_2O_7$ or $Ti_2Nb_{10}O_{29}$ as the niobium complex oxide constituting the active material.

The niobium complex oxide constituting the active material contains Li as a result of Li ions being inserted when the electrochemical element in which the niobium complex oxide is used as a negative-electrode active material is charged, or when the niobium complex oxide is pre-doped with Li ions before being used for the electrochemical element. For example, when Li ions are inserted into the niobium complex oxide represented by the general formula (1), the niobium complex oxide satisfies the following general formula (2), for example.

$$Li_yM_xAl_{1-1.5x}Nb_{11+0.5x}O_{29-\delta} \qquad (2)$$

In the general formula (2), the element M, the amount x of the element M, and $\delta$ relating to the amount of oxygen are the same as those in the general formula (1), and y satisfies $y \leq 22$.

The composition of the active material according to the present invention is represented by the general formula (1) or (2), for example, as described above, but the niobium complex oxide constituting the active material may also contain a typical element such as Na, K, Mg, Ca, C, S, P, or Si or a transition element such as Ti, Zr, Fe, Cr, Ni, Mn, Ta, Y, Cu, or Zn, or may have a composition that does not include Al and is constituted by Nb and at least one element selected from these elements. The niobium complex oxide constituting the active material may also contain moisture.

The active material according to the present invention has excellent output characteristics, and therefore, is unlikely to be affected by polarization that occurs as a result of Li ions diffusing inside the active material due to an increase in the particle size of active material particles. For the same reason, aggregates (secondary particles) may be formed by primary particles of the active material. However, from the viewpoint of improving the load characteristics and the charge-discharge cycle characteristics of the electrochemical element, it is preferable that secondary particles are constituted by primary particles of the active material sintered together, and it is more preferable to use primary particles of the active material.

Note that the average particle diameter of the active material is preferably 0.1 μm or more, and more preferably 0.5 μm or more from the viewpoint of suppressing a side reaction that causes capacity deterioration of the electrochemical element and increasing the density of the electrode, and is preferably 25 μm or less, and more preferably 10 μm or less from the viewpoint of suppressing charge-transfer resistance at surfaces of the active material particles.

The active material according to the present invention has excellent chemical stability, and therefore, it is possible to use an electrolyte such as an aqueous-solution-based electrolyte solution, a nonaqueous electrolyte solution, or a solid electrolyte, but it is more preferable to use the active material together with a solid electrolyte from the viewpoint of maintaining excellent output characteristics of the active material according to the present invention without causing the generation of gas and the growth of an insulating film over a long period of time.

Accordingly, the active material according to the present invention is preferably used as an active material (a positive-electrode active material or a negative-electrode active material) in an electrochemical element (for example, an all-solid-state secondary battery) including a solid electrolyte. Also, an electrode material for an electrochemical element according to the present invention, which will be described later, preferably contains a solid electrolyte together with the active material according to the present invention. Furthermore, an electrode for an electrochemical element according to the present invention preferably contains a solid electrolyte together with the active material according to the present invention or contains the electrode material for an electrochemical element according to the present invention that contains a solid electrolyte.

<Method for Manufacturing Electrode Active Material for Electrochemical Element>

There is no particular limitation on the method for manufacturing the active material according to the present invention, and the active material can be synthesized using a solid phase reaction method in which oxides of various metals such as Nb, Al, Cu, and Zn are mixed and fired, or a reaction method in which a mixture of metal compounds produced by coprecipitating chloride salts, nitrates, or alkoxides of metals in a liquid phase is used as a precursor, for example.

In the solid phase reaction method, firing is performed preferably at a temperature of 800°C or higher, and more preferably within a range from 900°C to 1100°C from the viewpoint of enhancing mutual diffusion of various metal ions. There is no particular limitation on the firing time, and firing can be performed for 1 to 1000 hours. If the firing temperature is higher than 1100°C, a crystal phase other than the monoclinic crystal phase may be generated or the composition of the active material may not satisfy the general formula (1) and the general formula (2) as a result of oxygen being gradually emitted from the sample. Therefore, the time for which the temperature is kept at 1100°C or higher is more preferably no longer than 10 hours. There is no particular limitation on the cooling rate at which the fired sample is cooled as long as the monoclinic crystal phase can be obtained, but the cooling rate is preferably 15°C/minute to 60°C/minute (including natural cooling) in order to obtain a stable monoclinic crystal phase at the above-described temperatures. Rapid cooling may also be performed at a cooling rate of 1°C/second to 1000°C/second.

<Method for Determining Composition of Electrode Active Material for Electrochemical Element>

The composition of the active material according to the present invention can be analyzed with use of inductively coupled plasma atomic emission spectroscopy (ICP-AES), for example. In a case where it is difficult to perform quantification through the ICP-AES because the active material according to the present invention is sintered with an oxide-based solid electrolyte and it is difficult to separate the components, for example, the composition may also be determined with use of various element analysis methods such as those performed using an energy dispersive X-ray spectrometer (EDS) or a wavelength dispersive X-ray spectrometer (WDS) in combination with a scanning electron microscope (SEM) or a transmission electron microscope (TEM).

<Method for Confirming Oxygen Deficiency in Electrode Active Material for Electrochemical Element>

The occurrence of oxygen deficiency in the active material (the niobium complex oxide constituting the active material) can be confirmed by using X-ray photoelectron spectroscopy (XPS) and confirming that the complex oxide has a peak attributed to pentavalent Nb and a peak attributed to tetravalent Nb (this method was used in Examples described below). Charge correction of the binding energy in a spectrum was performed taking the C1s peak position of contamination hydrocarbon on the surface of a sample as 284.6 eV, an XPS spectrum in a binding energy range from 202 eV to 214 eV is obtained, the shape of the background is estimated using the iterative Shirley method, and the background is removed from the spectrum. Peak fitting is performed on the obtained spectrum with use of the Pseudo-Voigt function, an area of a peak attributed to $Nb^{5+}$ (at a position where the binding energy is 209.8 eV to 210.2 eV) and an area of a peak attributed to $Nb^{4+}$ (at a position where the binding energy is lower than that at the peak position attributed to 3d3/2 of $Nb^{5+}$ by 0.5 eV to 2 eV) are determined for Nb3d3/2, and an average valence of Nb is calculated. Likewise, an area of a peak attributed to $Nb^{5+}$ (at a position where the binding energy is 206.6 eV to 207.1 eV) and an area of a peak attributed to $Nb^{4+}$ (at a position where the binding energy is lower than that at the peak position attributed to 3d5/2 of $Nb^{5+}$ by 0.5 eV to 2 eV) are determined for Nb3d5/2, and an average valence of Nb is calculated. An average of the average valence of Nb calculated for Nb3d3/2 and the average valence of Nb calculated for Nb3d5/2 is calculated to determine an average valence of Nb contained in the active material.

Similarly to the average valence of Nb, an average valence of Cu can be determined. An XPS spectrum in a binding energy range from 925 eV to 950 eV is obtained, an area of a peak attributed to $Cu^{2+}$ (at a position where the binding energy is 932.7 eV to 934.6 eV) and an area of a peak attributed to $Cu^+$ (at a position where the binding energy is lower than that at the peak position attributed to 2p3/2 of $Cu^{2+}$ by 0.5 eV to 2 eV) are determined for Cu2p3/2, and the average valence of Cu is calculated.

Next, various metal elements are quantified through inductively coupled plasma atomic emission spectrometry (ICP-AES). 5 mg of the sample is placed in a platinum crucible, 5 ml of hydrofluoric acid and 10 ml of 50 mass% sulfuric acid are added thereto, and heating decomposition treatment is performed to obtain a mixture of concentrated sulfuric acid and fluorides of the various metals (at this time, hydrofluoric acid turns into white smoke and is removed). After 2 ml of a 30 mass% hydrogen peroxide solution is added to the obtained mixture, the sample is diluted with pure water in a measuring flask to have a volume of 100 ml. The obtained sample solution and a standard solution for which concentrations of the various metals are known are alternately measured three times, an average value is calculated for each solution, and amounts of the metal elements contained in the sample are determined based on a ratio of a signal intensity of the sample solution to a signal intensity of the standard solution.

A total electric charge of cations contained in the sample is calculated based on the average valence of the Nb element and the average valence of the Cu element determined through XPS (assuming that Al is wholly present in the state of $Al^{3+}$) and contents of the various metal elements determined through ICP-AES, the content of the oxygen anion ($O^{2-}$) is calculated based on the total electric charge of cations such that electrical neutrality is obtained, and a difference between the calculated content and a content of the oxygen anion calculated assuming that the complex oxide does not have oxygen deficiency is taken as the oxygen deficiency amount $\delta$. That is, in the case of the niobium complex oxide represented by the general formula (1), the oxygen deficiency amount $\delta$ is a difference between an oxygen content calculated assuming that Al, Cu, and Nb contained in the sample are $Al^{3+}$, $Cu^{2+}$, and $Nb^{5+}$, respectively, and an oxygen content calculated using the above method.

Note that the oxygen content in the sample may be directly quantified by placing the sample in a graphite crucible, performing resistance heating in a helium gas flow, and detecting generated carbon dioxide using an infrared detector.

<Method for Confirming Monoclinic Structure of Electrode Active Material for Electrochemical Element>

It is possible to determine the crystal structure of the active material according to the present invention by measuring a powder X-ray diffraction (powder XRD) pattern using RINT2500VPC manufactured by Rigaku (X-ray used: CuK$\alpha$ ray) and comparing the pattern with the Powder Diffraction File (PDF) database or analyzing the pattern through Rietveld refinement. When crystal lattice sizes of different samples are to be compared, Si powder (manufactured by Rigaku, $a_0$=5.4308 Å at 298.1 K) is mixed as an internal reference when the samples for the powder XRD measurement are prepared, and spectrums are corrected such that a peak attributed to X-ray diffraction at the (111) plane of Si is at $2\theta$=28.442 degree. It is possible to calculate a lattice constant ($d_{010}$) in the b-axis direction of a unit lattice by setting the wavelength of X-rays to 1.5418 A and doubling an interplanar spacing determined from a peak attributed to diffraction at the (020) plane. In a case where the active material of the present invention is contained as a negative-electrode active material in a negative electrode, it is possible to obtain a powder XRD pattern of the electrode by taking out the negative electrode of a battery after constant-resistance discharging is performed for 100 hours by connecting a 1-k$\Omega$ resistor to the battery, flattening a surface of the electrode opposite to its surface joined to a current collector to make the surface parallel to the current collector, and then fixing the electrode to a sample table for powder XRD measurement. In a case where the active material of the present invention is contained as a positive-electrode active material in a positive electrode, it is possible to obtain a powder XRD pattern of the electrode by taking out the positive electrode of a battery after constant-current charging is performed at 10 $\mu$A with the upper limit voltage set to 3 V and then the battery is kept in a constant-voltage state of 3 V for 100 hours and, as is the case with the negative electrode, flattening a surface of the electrode opposite to its surface joined to a current collector to make the surface parallel to the current collector, and then fixing the electrode to a sample table for powder XRD measurement.

In a case where the active material of the present invention is sintered with a crystalline sulfide-based solid electrolyte or oxide-based solid electrolyte, it is possible to confirm the monoclinic structure by obtaining a test piece from a molded body of a sample containing the active material of the present invention through focused ion beam (FIB) processing, placing the test piece on a TEM sample table, performing thinning processing to obtain a thin piece with a thickness of 100 nm or less, acquiring a selected area electron diffraction (SAED) pattern using the TEM, and analyzing the pattern.

<Method for Measuring Da and Db in Active Material for Electrochemical Element>

Da and Db in the active material (the monoclinic niobium complex oxide constituting the active material) are calculated by determining a half-value width of a specific peak from a powder X-ray diffraction pattern of the active material obtained through the above-described method and using the following Scherrer equation.

$$D = K\lambda/w\cos\theta$$

In the equation, D represents a crystallite size, K represents a Scherrer constant, $\lambda$ represents an X-ray wavelength, w represents the half-value width, and $\theta$ represents a Bragg angle.

When the space group of the monoclinic niobium complex oxide constituting the active material belongs to C2/m, the crystallite size Da in the a-axis direction is determined based on a peak of the (200) plane, and the crystallite size Db in the b-axis direction is determined based on a peak of the (020) plane. When the space group of the monoclinic niobium complex oxide constituting the active material belongs to A2/m, the crystallite size Da in the a-axis direction is determined based on a peak of the (400) plane, and the crystallite size Db in the b-axis direction is determined based on the peak of the (020) plane. When the space group of the monoclinic niobium complex oxide constituting the active material belongs to I2/m, the crystallite size Da in the a-axis direction is determined based on the peak of the (400) plane, and the crystallite size Db in the b-axis direction is determined based on the peak of the (020) plane.

<Method for Measuring Average Particle Diameter of Active Material for Electrochemical Element>

The average particle diameter of the active material according to the present invention means a diameter value ($D_{50}$) at which an integrated percentage on the volume basis reaches 50% when the volume of particles is integrated from small particles using a particle size distribution measurement device (e.g., microtrack particle size distribution measurement device "HRA9320" manufactured by NIKKISO Co., Ltd.) (the same applies to particles of a solid electrolyte, a positive-electrode active material, and the like described later).

<Electrode Material for Electrochemical Element>

An electrode material for an electrochemical element (hereinafter may be simply referred to as an "electrode material") according to the present invention contains the electrode active material for an electrochemical element according to the present invention, and may contain other materials for forming an electrode for an electrochemical element together with the active material. Examples of such materials include a conductive aid such as carbon black, a binder, and a solid electrolyte, and the electrode material may contain one or two or more of these as necessary together with the active material of the present invention.

The electrode material may be constituted by the active material and another material attached to the surface of the active material or a mixture of the active material and another material. It is only required that the active material and another material are contained together in the electrode material.

In a case where the electrode material contains carbon black, examples of the carbon black include thermal black, furnace black, channel black, Ketjen black, and acetylene black. When the electrode material contains carbon black, the content of carbon black in the electrode material may be 0.1 to 25 parts by mass relative to 100 parts by mass of the active material of the present invention, for example.

In a case where the electrode material contains a binder, examples of the binder include fluororesins such as polyvinylidene fluoride (PVDF). When the electrode material contains a binder, the content of the binder in the electrode material may be 0.1 to 25 parts by mass relative to 100 parts by mass of the active material of the present invention, for example.

In a case where the electrode material contains a solid electrolyte, the solid electrolyte is not particularly limited as long as having Li ion conductivity, and examples of solid electrolytes that can be used include sulfide-based solid electrolytes, hydride-based solid electrolytes, halide-based solid electrolytes, and oxide-based solid electrolytes.

Examples of the sulfide-based solid electrolytes include particles of $Li_2S$-$P_2S_5$-based glass, $Li_2S$-$SiS_2$-based glass, $Li_2S$-$P_2S_5$-$GeS_2$-based glass, and $Li_2S$-$B_2S_3$-based glass. It is also possible to use thio-LISICON-type solid electrolytes [represented by $Li_{12-12a-b+c+6d-e}M^1_{3+a-b-c-d}M^2_bM^3_cM^4_dM^5_{12-e}X_e$ (where $M^1$ is Si, Ge, or Sn, $M^2$ is P or V, $M^3$ is

Al, Ga, Y, or Sb, $M^4$ is Zn, Ca, or Ba, $M^5$ is either S or S and O, X is F, Cl, Br, or I, and a, b, c, d, e satisfy $0 \leq a < 3$, and $0 \leq e \leq 3$) such as $Li_{10}GeP_2S_{12}$ and $Li_{9.54}Si_{1.74}P_{1.44}S_{11.7}Cl_{0.3}$] and argyrodite-type solid electrolytes [represented by $Li_{7-f+g}PS_{6-x}Cl_{x+y}$ (where f and g satisfy $0.05 \leq f \leq 0.9$ and $-3.0f + 1.8 \leq g \leq -3.0f + 5.7$) such as $Li_6PS_5Cl$, or represented by $Li_{7-h}PS_{6-h}Cl_iBr_j$ (where h, i, and j satisfy $h = i + j$, $0 < h \leq 1.8$, and $0.1 \leq i/j \leq 10.0$), for example], which attract attention in recent years due to their high Li ion conductivity.

Examples of the hydride-based solid electrolytes include $LiBH_4$ and a solid solution of $LiBH_4$ and any of the following alkali metal compounds (e.g., a solid solution in which the molar ratio between $LiBH_4$ and the alkali metal compound is 1:1 to 20:1). As the alkali metal compound in the solid solution, it is possible to use at least one selected from the group consisting of lithium halides (LiI, LiBr, LiF, LiCl, etc.), rubidium halides (RbI, RbBr, RbF, RbCl, etc.), cesium halides (CsI, CsBr, CsF, CsCl, etc.), lithium amides, rubidium amides, and cesium amides.

Examples of the halide-based solid electrolytes include monoclinic $LiAlCl_4$, defective spinel-type or layered-structure $LiInBr_4$, and monoclinic $Li_{6-3m}Y_mX_6$ (where m satisfies $0 < m < 2$, and X is Cl or Br). It is also possible to use known halide-based solid electrolytes such as those described in WO 2020/070958 and WO 2020/070955, for example.

Examples of the oxide-based solid electrolytes include $Li_2O\text{-}Al_2O_3\text{-}SiO_2\text{-}P_2O_5\text{-}TiO_2$-based glass ceramics, $Li_2O\text{-}Al_2O_3\text{-}SiO_2\text{-}P_2O_5\text{-}GeO_2$-based glass ceramics, garnet-type $Li_7La_3Zr_2O_{12}$, NASICON-type $Li_{1+O}Al_{1+O}Ti_{2-O}(PO_4)_3$ and $Li_{1+p}Al_{1+p}Ge_{2-p}(PO_4)_3$, and perovskite-type $Li_{3q}La_{2/3-q}TiO_3$.

Among these solid electrolytes, sulfide-based solid electrolytes are preferable for their high Li ion conductivity, sulfide-based solid electrolytes containing Li and P are more preferable, and argyrodite-type sulfide-based solid electrolytes are further preferable for their particularly high Li ion conductivity and high chemical stability.

When the electrode material contains a solid electrolyte, the content of the solid electrolyte in the electrode material may be 0.1 to 500 parts by mass relative to 100 parts by mass of the active material of the present invention, for example.

<Electrode for Electrochemical Element>

An electrode for an electrochemical element (hereinafter may be simply referred to as an "electrode") according to the present invention contains the active material of the present invention or the electrode material of the present invention and is used as a positive electrode or a negative electrode of an electrochemical element such as a nonaqueous electrolyte secondary battery.

The electrode according to the present invention may be, for example, a molded body (pellet or the like) obtained by molding an electrode mixture containing the active material or the electrode material, or an electrode having a structure including a current collector and a layer (electrode mixture layer) formed on the current collector from a molded body made of the electrode mixture.

In the case where the active material of the present invention is used in the electrode mixture constituting the electrode, necessary materials selected from a conductive aid, a binder, a solid electrolyte, and the like are contained in the electrode mixture together with the active material. In the case where the electrode material of the present invention is used in the electrode mixture constituting the electrode as well, necessary materials selected from a conductive aid, a binder, a solid electrolyte, and the like may be contained in the electrode mixture together with the electrode material, but the electrode mixture may be constituted only by the electrode material depending on the composition of the electrode material.

Examples of the conductive aid in the electrode mixture include: carbon materials such as the various types of carbon black described above as conductive aids that can be used for the electrode material, graphite (natural graphite, artificial graphite), graphene, vapor-grown carbon fiber, carbon nanofiber, and carbon nanotube; and powder and porous bodies made of simple substances or alloys of Cu, Ni, Al, Au, and Pd. One of these may be used alone, or two or more of these may be used in combination. The content of the conductive aid in the electrode mixture (including an amount of carbon black that may be contained in the electrode material used in the electrode mixture) is preferably 0 to 25 mass%.

It is possible to use, as the binder in the electrode mixture, the above-listed examples of binders that can be used for the electrode material. The electrode material need not contain a binder if it is possible to obtain favorable moldability sufficient to form a molded body from the electrode mixture without using a binder, as in a case where the electrode mixture contains a sulfide-based solid electrolyte (including a case where the electrode material constituting the electrode mixture contains the sulfide-based solid electrolyte) and powder of the electrode mixture is placed in a mold and compression molded, for example.

When the electrode mixture needs to contain a binder, the content of the binder (including an amount of a binder that may be contained in the electrode material used in the electrode mixture) is preferably 15 mass% or less, and preferably 0.5 mass% or more. On the other hand, when sufficient moldability can be obtained without using a binder due to the electrode mixture containing a sulfide-based solid electrolyte, the content of the binder is preferably 0.5 mass% or less, more preferably 0.3 mass% or less, and further preferably 0 mass% (i.e., the electrode mixture does not contain a binder).

As the solid electrolyte in the electrode mixture, it is possible to use one or two or more of the various sulfide-based solid electrolytes, hydride-based solid electrolytes, halide-based solid electrolytes, and oxide-based solid electrolytes described above as solid electrolytes that can be used for the electrode material. In order to further enhance characteristics of the electrochemical element, it is desirable to include a sulfide-based solid electrolyte in the electrode mixture, and it is more desirable to include an argyrodite-type sulfide-based solid electrolyte in the electrode mixture.

From the viewpoint of reducing grain-boundary resistivity, the average particle diameter of the solid electrolyte is preferably 0.1 $\mu$m or more, and more preferably 0.2 $\mu$m or more. On the other hand, from the viewpoint of forming a sufficient contact interface between the active material and the solid electrolyte, the average particle diameter of the solid electrolyte is preferably 10 $\mu$m or less, and more preferably 5 $\mu$m or less.

When the electrode mixture contains a solid electrolyte, the content of the solid electrolyte (including an amount of a solid electrolyte that may be contained in the electrode material used in the electrode mixture) is preferably 4 to 80 mass%.

The content of the active material in the electrode mixture (an amount of the active material used in the electrode mixture or derived from the electrode material) is preferably 20 to 95 mass%.

In the case where the electrode includes a current collector, any of the following may be used as the current collector. When the electrode is used as the positive electrode of the electrochemical element, it is possible to use, as the current collector, a foil, a punched metal, a net, an expanded metal, or a foamed metal made of aluminum, nickel, stainless steel, or the like; or a carbon sheet, for example. When the electrode is used as the negative electrode of the electrochemical element, it is possible to use, as the current collector, a foil, a punched metal, a net, an expanded metal, or a foamed metal made of copper, nickel, or aluminum; or a carbon sheet, for example.

A molded body made of the electrode mixture can be formed by mixing the active material of the present invention or the electrode material of the present invention with a conductive aid, a binder, a solid electrolyte, or the like, which are added as necessary, and compressing the thus prepared electrode mixture through compression molding or the like.

The electrode including a current collector can be produced by affixing the molded body of the electrode mixture formed as described above to the current collector through pressure bonding or the like.

A molded body made of the electrode mixture may also be formed by mixing the electrode mixture and a solvent to prepare an electrode mixture-containing composition, applying this composition to a substrate such as the current collector or a solid electrolyte layer (in the case of forming an all-solid-state battery) to be opposed to the electrode, and performing pressing processing after drying the composition.

Water or an organic solvent such as N-methyl-2-pyrrolidone (NMP) can be used as the solvent in the electrode mixture-containing composition. In a case where a solid electrolyte is also contained in the electrode mixture-containing composition, it is preferable to select a solvent that is less likely to deteriorate the solid electrolyte. In particular, sulfide-based solid electrolytes and hydride-based solid electrolytes cause chemical reactions with a minute amount of water, and therefore, it is preferable to use non-polar aprotic solvents such as hydrocarbon solvents including hexane, heptane, octane, nonane, decane, decaline, toluene, xylene, mesitylene, and tetralin. In particular, it is more preferable to use a super dehydrated solvent in which the water content is reduced to 0.001 mass% (10 ppm) or less. It is also possible to use fluorine-based solvents such as "Vertrel (registered trademark)" manufactured by Du Pont-Mitsui Fluorochemicals Co., Ltd., "Zeorora (registered trademark)" manufactured by Zeon Corporation, and "Novec (registered trademark)" manufactured by Sumitomo 3M Limited, and nonaqueous organic solvents such as dichloromethane, diethyl ether, and anisole.

The thickness of the molded body made of the electrode mixture (in the case of the electrode including the current collector, the thickness of the molded body of the electrode mixture on a side of the current collector, the same applies hereinafter) is generally 50 $\mu$m or more, but preferably 200 $\mu$m or more from the viewpoint of increasing the capacity of the electrochemical element. In general, the load characteristics of an electrochemical element tend to be improved when the thicknesses of the positive electrode and the negative electrode are reduced, but the load characteristics can be improved according to the present invention even when the molded body of the electrode mixture is as thick as 200 $\mu$m or more. Therefore, the effects of the present invention are more noticeable when the thickness of the molded body of the electrode mixture is 200 $\mu$m or more, for example. The thickness of the molded body of the electrode mixture is generally 3000 $\mu$m or less.

In the case of an electrode for an electrochemical element produced by forming an electrode mixture layer on the current collector using an electrode mixture-containing composition containing a solvent, the thickness of the electrode mixture layer is preferably 50 to 1000 pm.

<Electrochemical Element>

There is no particular limitation on the configuration and structure of an electrochemical element according to the present invention other than that the electrochemical element includes a positive electrode and a negative electrode and either one of the positive electrode and the negative electrode is the electrode for an electrochemical element according to the present invention. It is possible to apply various configurations and structures adopted for conventionally-known electrochemical elements such as nonaqueous electrolyte secondary batteries.

The electrochemical element according to the present invention encompasses electrochemical elements including nonaqueous electrolytes such as: nonaqueous electrolyte secondary batteries such as a nonaqueous electrolyte solution secondary battery including a nonaqueous electrolyte solution and a separator disposed between the positive electrode and the negative electrode, and an all-solid-state secondary battery including a solid electrolyte layer between the positive electrode and the negative electrode; and a super capacitor. The following describes a nonaqueous electrolyte secondary battery, which is a representative form of the electrochemical element according to the present invention, in detail.

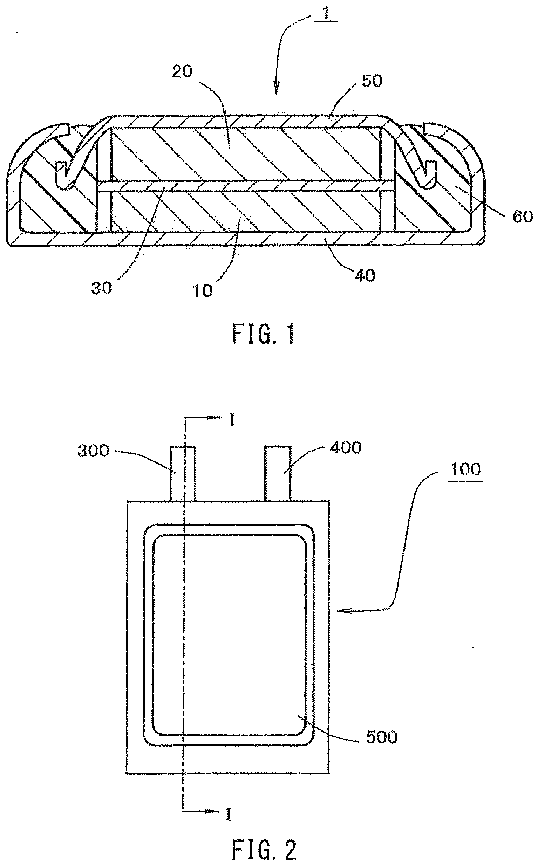

FIG. 1 is a schematic cross-sectional view showing a nonaqueous electrolyte secondary battery, which is an example of the electrochemical element according to the present invention. A nonaqueous electrolyte secondary battery 1 shown in FIG. 1 includes a positive electrode 10, a negative electrode 20, a separator (a solid electrolyte layer in a case where the nonaqueous electrolyte secondary battery is an all-solid-state secondary battery) 30 located between the positive electrode 10 and the negative electrode 20, and a nonaqueous electrolyte solution (in a case where the nonaqueous electrolyte secondary battery is a nonaqueous electrolyte solution secondary battery) that are sealed in an exterior body constituted by an exterior can 40, a sealing can 50, and a resin gasket 60 located therebetween.

The sealing can 50 is fitted into the opening of the exterior can 40 via the gasket 60, and the opening of the exterior can 40 is sealed by fastening the end portion of the opening of the exterior can 40 inward and thereby bringing the gasket 60 into contact with the sealing can 50. Thus the inside of the battery is hermetically sealed.

An exterior can and a sealing can that are made of stainless steel or the like can be used. Polypropylene, nylon, or the like can be used as the material of the gasket. When heat resistance is required due to the application of the battery, it is also possible to use heat-resistant resins whose melting point is higher than 240°C, such as fluororesins such as tetrafluoroethylene-perfluoroalkoxyethylene copolymers (PFA); polyphenylene ether (PPE), polysulfone (PSF), polyarylate (PAR), polyethersulfone (PES), polyphenylene sulfide (PPS), and polyether ether ketone (PEEK) as the material of the gasket. When the battery is used for applications in which heat resistance is required, a glass hermetic seal can also be used to seal the battery.

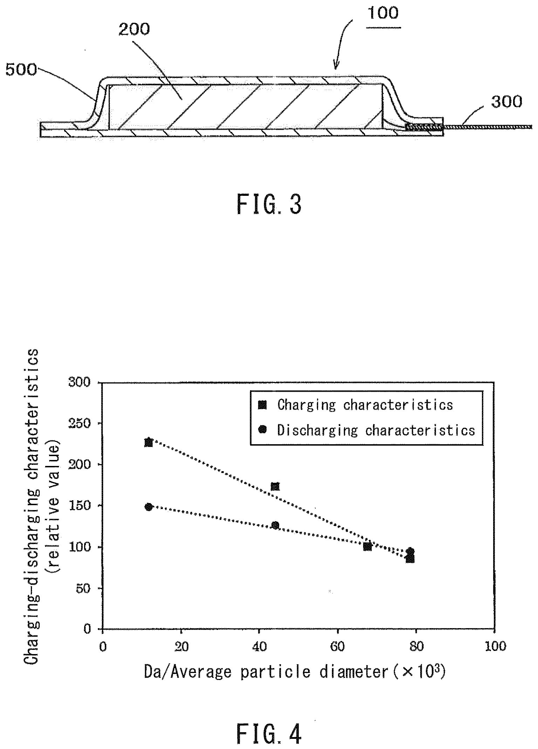

FIGS. 2 and 3 are schematic diagrams showing another example of the nonaqueous electrolyte secondary battery, which is an example of the electrochemical element according to the present invention. FIG. 2 is a plan view of the nonaqueous electrolyte secondary battery, and FIG. 3 is a cross-sectional view taken along line I-I in FIG. 2.

A nonaqueous electrolyte secondary battery 100 shown in FIGS. 2 and 3 has a configuration in which an electrode body 200 is housed in a laminate-film exterior body 500 formed using two metal laminate films, and the laminate-film exterior body 500 is sealed by thermally welding outer peripheral regions of the upper and lower laminate films.

In a case where the nonaqueous electrolyte secondary battery 100 is an all-solid-state secondary battery, the electrode body 200 is constituted by a stack of a positive electrode, a negative electrode, and a solid electrolyte layer located between the positive electrode and the negative electrode. On the other hand, in a case where the nonaqueous electrolyte secondary battery 100 is a nonaqueous electrolyte secondary battery other than the all-solid-state secondary battery, the electrode body 200 is constituted by a stack of a positive electrode, a negative electrode, and a separator located between the positive electrode and the negative electrode, and a nonaqueous electrolyte is enclosed in the laminate-film exterior body 500 together with the electrode body 200.

Note that the layers included in the laminate-film exterior body 500 and the components of the electrode body 200 (the positive electrode, the negative electrode, etc.) are not distinctively shown in FIG. 3 in order to avoid complication in the figure.

The positive electrode included in the electrode body 200 is connected to a positive electrode external terminal 300 inside the battery 100, and the negative electrode included in the electrode body 200 is also connected to a negative electrode external terminal 400 inside the battery 100, which is not shown in the drawings. One end of the positive electrode external terminal 300 and one end of the negative electrode external terminal 400 are drawn out of the laminate-film exterior body 500 so as to be capable of being connected to an external device or the like.

In the case where the nonaqueous electrolyte secondary battery is an all-solid-state secondary battery, an electrode produced using an electrode mixture that contains a solid electrolyte is used as the electrode of the present invention. On the other hand, in a case where the nonaqueous electrolyte secondary battery is a nonaqueous electrolyte solution secondary battery, the electrode mixture used for the electrode of the present invention need not contain a solid electrolyte.

When a nonaqueous electrolyte secondary battery is to be produced using an electrode that contains the active material of the present invention, as the positive electrode, and using a negative electrode that does not contain Li (Li ions) involved in charging and discharging of the battery, it is necessary to introduce Li (Li ions) involved in charging and discharging of the battery into the active material contained in the electrode of the present invention. In this case, it is possible to dope the active material of the present invention with Li ions in advance using a conventional method (out-of-system pre-doping), for example. Alternatively, when the nonaqueous electrolyte secondary battery includes a nonaqueous electrolyte solution, it is possible to dispose a Li source (metal Li foil, Li alloy foil, etc.) at a place where the Li source can come into contact with the nonaqueous electrolyte solution inside the battery, and dope the active material contained in the electrode of the present invention with Li ions inside the battery (in-system pre-doping), for example. In the case of the in-system pre-doping, it is possible to use a pre-doping electrode that is electrically connected to the negative electrode and includes the Li source affixed to the surface of a current collector, for example.

<Negative Electrode of Nonaqueous Electrolyte Secondary Battery Including Electrode of the Present Invention as Positive Electrode>

In the case where the positive electrode of the nonaqueous electrolyte secondary battery is the electrode of the present invention, the negative electrode may be constituted only by a molded body made of a negative electrode mixture that contains a negative-electrode active material and a conductive aid, for example, or the negative electrode may have a structure including a current collector and a layer (negative electrode mixture layer) formed on the current collector from a molded body made of the negative electrode mixture, for example.

Examples of the negative-electrode active material include carbon-based materials that can occlude and release lithium, such as graphite, pyrolytic carbons, cokes, glassy carbons, fired bodies of organic polymer compounds, mesophase carbon microbeads (MCMB), and carbon fibers. One of these carbon-based materials or a mixture of two or more of them is used as the negative-electrode active material. It is also possible to use, as the negative-electrode active material, simple substances, compounds, and alloys including elements such as Al, Si, Sn, Ge, Bi, Sb, In, Zn, and P; compounds that can be charged and discharged at low voltage like lithium metal, such as lithium-containing nitrides and lithium-containing sulfides; and lithium metal.

The content of the negative-electrode active material in the negative electrode mixture is preferably 15 to 100 mass%.

As the conductive aid in the negative electrode, it is possible to use the above-listed examples of conductive aids that can be used for the electrode of the present invention. The content of the conductive aid in the negative electrode mixture is preferably 0.1 to 15 mass%.

In a case where the nonaqueous electrolyte secondary battery including the electrode of the present invention as the positive electrode is an all-solid-state secondary battery and the negative-electrode active material is in the form of particles, a solid electrolyte can be included in the negative electrode mixture.

As the solid electrolyte in the negative electrode, it is possible to use one or two or more of the various sulfide-based solid electrolytes, hydride-based solid electrolytes, halide-based solid electrolytes, and oxide-based solid electrolytes described above as solid electrolytes that can be used for the electrode material of the present invention. In order to further enhance battery characteristics, it is desirable to include a sulfide-based solid electrolyte in the negative electrode mixture, and it is more desirable to include an argyrodite-type sulfide-based solid electrolyte in the negative electrode mixture.

The content of the solid electrolyte in the negative electrode mixture is preferably 4 to 90 mass%.

The negative electrode mixture may contain a binder, but need not contain a binder if it is possible to obtain favorable moldability without using a binder, as in a case where the negative electrode mixture contains a sulfide-based solid electrolyte and the negative electrode is formed by compression molding powder of the negative electrode mixture in a mold, for example. Any of the above-listed examples of binders that can be used for the electrode of the present invention can be used.

When the negative electrode mixture needs to contain a binder, the content of the binder is preferably 15 mass% or less, and preferably 0.5 mass% or more. On the other hand, when the negative electrode mixture need not contain a binder from the viewpoint of moldability, the content of the binder is preferably 0.5 mass% or less, more preferably 0.3 mass% or less, and further preferably 0 mass% (i.e., the negative electrode mixture does not contain a binder).

In the case where the negative electrode includes a current collector, the current collector may be any of the above-listed examples of current collectors that can be used in the case where the electrode of the present invention is used as the negative electrode.

A molded body made of the negative electrode mixture can be formed by mixing the negative-electrode active material with a conductive aid, a binder, a solid electrolyte, or the like, which are added as necessary, and compressing the thus prepared negative electrode mixture through compression molding or the like. The negative electrode constituted only by the molded body made of the negative electrode mixture can be produced using this method.

The negative electrode including a current collector can be produced by affixing the molded body of the negative electrode mixture formed as described above to the current collector through pressure bonding or the like.

The negative electrode including a current collector can also be produced by applying a negative electrode mixture-containing composition (e.g., paste or slurry) obtained by dispersing the negative electrode mixture in a solvent, to the current collector, drying the composition, and then performing compression molding such as calendering as necessary, to form a molded body (negative electrode mixture layer) made of the negative electrode mixture on the surface of the current collector.

Water or an organic solvent such as NMP can be used as the solvent in the negative electrode mixture-containing composition. In a case where a solid electrolyte is also contained in the negative electrode mixture-containing composition, it is desirable to select a solvent that is less likely to deteriorate the solid electrolyte, and it is preferable to use any of the above-listed various examples of solvents that can be used for the electrode mixture-containing composition containing a solid electrolyte.

The thickness of the molded body made of the negative electrode mixture (in the case of the negative electrode including the current collector, the thickness of the molded body of the negative electrode mixture on a side of the current collector, the same applies hereinafter) is generally 50 $\mu$m or more, but preferably 200 pm or more from the viewpoint of increasing the capacity of the battery. The thickness of the molded body of the negative electrode mixture is generally 2000 $\mu$m or less.

In the case of a negative electrode produced by forming a negative electrode mixture layer on the current collector using a negative electrode mixture-containing composition containing a solvent, the thickness of the negative electrode mixture layer is preferably 50 to 1000 $\mu$m.

<Positive Electrode of Nonaqueous Electrolyte Secondary Battery Including Electrode of the Present Invention as Negative Electrode>

In the case where the negative electrode of the nonaqueous electrolyte secondary battery is the electrode of the present invention, the positive electrode may be constituted only by a molded body made of a positive electrode mixture that contains a positive-electrode active material and a conductive aid, for example, or the positive electrode may have a structure including a current collector and a layer (positive electrode mixture layer) formed on the current collector from a molded body made of the positive electrode mixture, for example.

There is no particular limitation on the positive-electrode active material as long as a positive-electrode active material used in a conventionally known nonaqueous electrolyte secondary battery, namely an active material capable of occluding and releasing Li ions, is used. Specific examples of the positive-electrode active material include spinel-type lithium-manganese complex oxides represented by $LiM_rMn_{2-r}O_4$ (where M is at least one element selected from the group consisting of Li, Na, K, B, Mg, Ca, Sr, Ba, Ti, V, Cr, Zr, Fe, Co, Ni, Cu, Zn, Al, Sn, Sb, In, Nb, Ta, Mo, W, Y, Ru, and Rh, and r satisfies $0 \leq r \leq 1$), layered compounds represented by $Li_rMn_{(1-s-r)}Ni_sM_tO_{(2-u)}F_v$ (where M is at least one element selected from the group consisting of Co, Mg, Al, B, Ti, V, Cr, Fe, Cu, Zn, Zr, Mo, Sn, Ca, Sr, and W, and r, s, t, u, and v satisfy $0.8 \leq r \leq 1.2$, $0 < s < 0.5$, $0 \leq t \leq 0.5$, $u+v < 1$, $-0.1 \leq u \leq 0.2$, and $0 \leq v \leq 0.1$), lithium-cobalt complex oxides represented by $LiCo_{1-r}M_rO_2$ (where M is at least one element selected from the group consisting of Al, Mg, Ti, V, Cr, Zr, Fe, Ni, Cu, Zn, Ga, Ge, Nb, Mo, Sn, Sb, and Ba, and r satisfies $0 \leq r \leq 0.5$), lithium-nickel complex oxides represented by $LiNi_{1-r}M_rO_2$ (where M is at least one element selected from the group consisting of Al, Mg, Ti, Zr, Fe, Co, Cu, Zn, Ga, Ge, Nb, Mo, Sn, Sb, and Ba, and r satisfies $0 \leq r \leq 0.5$), olivine-type complex oxides represented by $Li_{1+s}M_{1-r}N_rPO_4F_s$ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and r and s satisfy $0 \leq r \leq 0.5$ and $0 \leq s \leq 1$), and pyrophosphoric acid compounds represented by $Li_2M_{1-r}N_rP_2O_7$ (where M is at least one element selected from the group consisting of Fe, Mn, and Co, N is at least one element selected from the group consisting of Al, Mg, Ti, Zr, Ni, Cu, Zn, Ga, Ge, Nb, Mo, Sn, Sb, V, and Ba, and r satisfies $0 \leq r \leq 0.5$). These compounds may be used alone or in combination of two or more.

In the case where the nonaqueous electrolyte secondary battery is an all-solid-state secondary battery, the average particle diameter of the positive-electrode active material is preferably 0.1 $\mu$m or more, and more preferably 0.5 $\mu$m or more from the viewpoint of suppressing a side reaction that causes capacity deterioration of the battery and increasing the density of the electrode, and preferably 25 $\mu$m or less, and more preferably 10 $\mu$m or less. The positive-electrode active material may be in the form of primary particles or secondary particles formed by aggregated primary particles. When a positive-electrode active material having an average particle diameter within the above range is used, many interfaces between the positive-electrode active material and a solid electrolyte contained in the positive electrode can be secured, and accordingly, the load characteristics of the battery are further improved.

In the case where the nonaqueous electrolyte secondary battery is an all-solid-state secondary battery, the positive-electrode active material preferably includes, on its surface, a reaction suppressing layer for suppressing a reaction between the positive-electrode active material and the solid electrolyte contained in the positive electrode.

If the positive-electrode active material comes into direct contact with the solid electrolyte in the molded body made of the positive electrode mixture, there is a risk that the solid electrolyte will be oxidized and a resistive layer will be formed, which leads to a reduction in ion conductivity in the molded body. It is possible to suppress the reduction in ion conductivity in the molded body due to oxidation of the solid electrolyte by providing the reaction suppressing layer for suppressing a reaction with the solid electrolyte on the surface of the positive-electrode active material to prevent direct contact between the positive-electrode active material and the solid electrolyte.

The reaction suppressing layer is only required to be made of a material that has ion conductivity and can suppress a reaction between the positive-electrode active material and the solid electrolyte. Examples of materials that can constitute the reaction suppressing layer include oxides that contain Li and at least one element selected from the group consisting of Nb, P, B, Si, Ge, Ti, Zr, Ta, and W, or more specifically, Nb-containing oxides such as $LiNbO_3$, and $LisPO_4$, $Li_3BO_3$, $Li_4SiO_4$, $Li_4GeO_4$, $LiTiO_3$, $LiZrO_3$, and $Li_2WO_4$. The reaction suppressing layer may contain only one of these oxides, two or more of these oxides, or a composite compound formed by two or more of these oxides. Among these oxides, Nb-containing oxides are preferably used, and $LiNbO_3$ is more preferably used.

Preferably, 0.1 to 2.0 parts by mass of the reaction suppressing layer is present on the surface of the positive-electrode active material relative to 100 parts by mass of the positive-electrode active material. If the amount of the reaction suppressing layer is within this range, it is possible to favorably suppress a reaction between the positive-electrode active material and the solid electrolyte.

The reaction suppressing layer can be formed on the surface of the positive-electrode active material using a sol-gel method, a mechano-fusion method, a CVD method, a PVD method, an ALD method, or the like.

The content of the positive-electrode active material in the positive electrode mixture is preferably 20 to 95 mass%.

As the conductive aid in the positive electrode, it is possible to use the above-listed examples of conductive aids that can be used for the electrode of the present invention. The content of the conductive aid in the positive electrode mixture is preferably 0.1 to 15 mass%.

In the case where the nonaqueous electrolyte secondary battery is an all-solid-state secondary battery, a solid electrolyte is included in the positive electrode mixture.

As the solid electrolyte in the positive electrode, it is possible to use one or two or more of the various sulfide-based solid electrolytes, hydride-based solid electrolytes, halide-based solid electrolytes, and oxide-based solid electrolytes described above as solid electrolytes that can be used for the electrode material of the present invention. In order to further enhance battery characteristics, it is desirable to include a sulfide-based solid electrolyte in the positive electrode mixture, and it is more desirable to include an argyrodite-type sulfide-based solid electrolyte in the positive electrode mixture.

The content of the solid electrolyte in the positive electrode mixture is preferably 4 to 80 mass%.

The positive electrode mixture may contain a binder, but need not contain a binder if it is possible to obtain favorable moldability without using a binder, as in a case where the positive electrode mixture contains a sulfide-based solid electrolyte and the positive electrode is formed by compression molding powder of the positive electrode mixture in a mold, for example. Any of the above-listed examples of binders that can be used for the electrode of the present invention can be used.

When the positive electrode mixture needs to contain a binder, the content of the binder is preferably 15 mass% or less, and preferably 0.5 mass% or more. On the other hand, when the positive electrode mixture need not contain a binder from the viewpoint of moldability, the content of the binder is preferably 0.5 mass% or less, more preferably 0.3 mass% or less, and further preferably 0 mass% (i.e., the positive electrode mixture does not contain a binder).

In the case where the positive electrode includes a current collector, the current collector may be any of the above-listed examples of current collectors that can be used in the case where the electrode of the present invention is used as the positive electrode.

A molded body made of the positive electrode mixture can be formed by mixing the positive-electrode active material and the conductive aid with a binder, a solid electrolyte, or the like, which are added as necessary, and compressing the thus prepared positive electrode mixture through compression molding or the like. The positive electrode constituted only by the molded body made of the positive electrode mixture can be produced using this method.

The positive electrode including a current collector can be produced by affixing the molded body of the positive electrode mixture formed as described above to the current collector through pressure bonding or the like.

The positive electrode including a current collector can also be produced by applying a positive electrode mixture-containing composition (e.g., paste or slurry) obtained by dispersing the positive electrode mixture in a solvent, to the current collector, drying the composition, and then performing compression molding such as calendering as necessary, to form a molded body (positive electrode mixture layer) made of the positive electrode mixture on the surface of the current collector.

An organic solvent such as NMP can be used as the solvent in the positive electrode mixture-containing composition. In a case where a solid electrolyte is also contained in the positive electrode mixture-containing composition, it is desirable to select a solvent that is less likely to deteriorate the solid electrolyte, and it is preferable to use any of the above-listed various examples of solvents that can be used for the electrode mixture-containing composition containing a solid electrolyte.

The thickness of the molded body made of the positive electrode mixture (in the case of the positive electrode including the current collector, the thickness of the molded body of the positive electrode mixture on a side of the current collector, the same applies hereinafter) is generally 50 μm or more, but preferably 200 μm or more from the viewpoint of increasing the capacity of the battery. The thickness of the molded body of the positive electrode mixture is generally 2000 μm or less.

In the case of a positive electrode produced by forming a positive electrode mixture layer on the current collector using a positive electrode mixture-containing composition containing a solvent, the thickness of the positive electrode mixture layer is preferably 50 to 1000 $\mu$m.

(Solid Electrolyte Layer)

In the case where the nonaqueous electrolyte secondary battery is an all-solid-state secondary battery, it is possible to use, as the solid electrolyte in the solid electrolyte layer located between the positive electrode and the negative electrode, one or two or more of the various sulfide-based solid electrolytes, hydride-based solid electrolytes, halide-based solid electrolytes, and oxide-based solid electrolytes described above as solid electrolytes that can be used for the electrode material of the present invention. In order to further enhance the battery characteristics, it is desirable that the solid electrolyte layer contains a sulfide-based solid electrolyte, and it is more desirable that the solid electrolyte layer contains an argyrodite-type sulfide-based solid electrolyte. It is yet more desirable that all of the positive electrode, the negative electrode, and the solid electrolyte layer contain a sulfide-based solid electrolyte, and it is further desirable that all of these contain an argyrodite-type sulfide-based solid electrolyte.

The solid electrolyte layer may include a porous material such as nonwoven fabric made of a resin, as a support.

The solid electrolyte layer can be formed using a method in which the solid electrolyte is compressed through compression molding or the like, or a method in which a composition for forming the solid electrolyte layer prepared by dispersing the solid electrolyte in a solvent is applied to a substrate, the positive electrode, or the negative electrode and is then dried, and compression molding such as pressing processing is optionally performed, for example.

As the solvent used in the composition for forming the solid electrolyte layer, it is desirable to select a solvent that is less likely to deteriorate the solid electrolyte, and it is preferable to use any of the above-listed various examples of solvents that can be used for the electrode mixture-containing composition containing a solid electrolyte.

The thickness of the solid electrolyte layer is preferably 10 to 500 $\mu$m.

(Separator)

In a case where the nonaqueous electrolyte secondary battery is a battery other than the all-solid-state secondary battery, a separator disposed between the positive electrode and the negative electrode preferably has sufficient strength and is capable of retaining a large amount of nonaqueous electrolyte. From this viewpoint, it is preferable to use a microporous film, nonwoven fabric, or the like that has a thickness of 10 to 50 $\mu$m and a porosity ratio of 30% to 70% and contains polyethylene, polypropylene, or an ethylenepropylene copolymer.

(Nonaqueous Electrolyte)

In the case where the nonaqueous electrolyte secondary battery is a battery other than the all-solid-state secondary battery, a nonaqueous liquid electrolyte (hereinafter referred to as a "nonaqueous electrolyte solution") is commonly used as the nonaqueous electrolyte. The nonaqueous electrolyte solution is obtained by dissolving an electrolyte salt such as a lithium salt in an organic solvent. There is no particular limitation on the organic solvent, and examples thereof include: chain esters such as dimethyl carbonate, diethyl carbonate, ethyl methyl carbonate, and methyl propyl carbonate; cyclic esters having a high dielectric constant such as ethylene carbonate, propylene carbonate, butylene carbonate, and vinylene carbonate; and mixed solvents obtained by mixing chain esters and cyclic esters. In particular, a mixed solvent obtained by mixing a chain ester, which is the main solvent, and a cyclic ester is suitably used.

Examples of the electrolyte salt dissolved in the organic solvent to prepare the nonaqueous electrolyte solution include $LiPF_6$, $LiBF_4$, $LiAsF_6$, $LiSbF_6$, $LiCF_3SO_3$, $LiC_4F_9SO_3$, $LiCF_3CO_2$, $Li_2C_2F_4(SO_3)_2$, $LiC_nF_{2n+1}SO_3$ (n≥2), $LiN(RfSO_2)$ $(Rf'SO_2)$, $LiC(RfSO_2)_3$, and $LiN(RfOSO_2)_2$ [where Rf and Rf' are fluoroalkyl groups]. One of these is used alone or a mixture of two or more of these is used. The concentration of the electrolyte salt in the nonaqueous electrolyte solution is not particularly limited, but is preferably 0.3 mol/l or more, and more preferably 0.4 mol/l or more. Also, the concentration is preferably 1.7 mol/l or less, and more preferably 1.5 mol/l or less.

Other than the nonaqueous electrolyte solution, it is also possible to use, as the nonaqueous electrolyte in the nonaqueous electrolyte secondary battery, a gel electrolyte obtained by forming a gel from the nonaqueous electrolyte solution using a gelling agent made of a polymer or the like.

(Electrode Body)

The positive electrode and the negative electrode can be used for a battery in the form of a layered electrode body obtained by layering these electrodes with the solid electrolyte layer or the separator being located therebetween or in the form of a wound electrode body obtained by winding the layered electrode body.

Note that it is preferable to form the electrode body including the solid electrolyte layer by performing compression molding in the state where the positive electrode, the negative electrode, and the solid electrolyte layer are layered from the viewpoint of enhancing the mechanical strength of the electrode body.

(Form of Battery)

The nonaqueous electrolyte secondary battery may be in the form that includes an exterior body having a metal exterior can with a closed-ended tubular shape (e.g., cylindrical shape or polygonal tubular shape) and a sealing structure for sealing the opening thereof, instead of the form that includes an exterior body constituted by an exterior can, a sealing can, and a gasket as shown in FIG. 1, namely the form that is generally called a coin-shaped battery or button-shaped battery, and the form that includes an exterior body constituted by resin films or metal-resin laminate films as shown in FIGS. 2 and 3.

(Db/Da After Battery is Charged and Discharged)

The value of Db/Da of the active material (active material according to the present invention) contained in the battery increases as the nonaqueous electrolyte secondary battery is charged and discharged.

[Examples]

Hereinafter, the present invention will be described in detail based on examples. However, the present invention is not limited to the following examples.

Example 1

<Manufacture of Positive Electrode>

A coating solution for forming a reaction suppressing layer was prepared by mixing 0.86 g of lithium and 38.7 g of pentaethoxy niobium in 394 g of dehydrated ethanol. Next, the coating solution for forming a reaction suppressing layer was applied at a rate of 2 g/minute to 1000 g of a positive-electrode active material ($LiNi_{0.5}Mn_{1.5}O_4$) using a coating machine including a tumbling fluidized bed. The thus obtained powder was subjected to heat treatment at 350°C to obtain a positive electrode material in which 2 parts by mass of a reaction suppressing layer made of $LiNbO_3$ was formed on the surface of the positive-electrode active material relative to 100 parts by mass of the positive-electrode active material.
A positive electrode mixture was prepared by mixing the positive electrode material, vapor-grown carbon fiber (conductive aid), and $Li_{5.8}PS_{4.6}Cl_{1.6}$ (sulfide-based solid electrolyte). The positive electrode material, the conductive aid, and the sulfide-based solid electrolyte were mixed at a mass ratio of 66:4:30. 102 mg of the positive electrode mixture was placed in a powder-molding mold having a diameter of 7.5 mm, and molded at a pressure of 1000 kgf/cm$^2$ using a pressing machine to obtain a positive electrode constituted by a molded body made of the positive electrode mixture and having a columnar shape.

<Formation of Solid Electrolyte Layer>

16 mg of a sulfide-based solid electrolyte ($Li_{5.4}PS_{4.2}Cl_{0.8}Br_{0.8}$) was placed on the positive electrode in the powder-molding mold, and molded at a pressure of 1000 kgf/cm$^2$ using the pressing machine to form a solid electrolyte layer on the molded body made of the positive electrode mixture.

<Manufacture of Negative Electrode>

An active material was synthesized from powders of various metal oxides (all obtained from Kojundo Chemical Laboratory Co., Ltd.), which were used as starting materials, by using a solid phase reaction method. 96.73 g of $Nb_2O_5$ (purity: >99.9%) and 3.37 g of $\alpha$-$Al_2O_3$ (purity: >99.99%) were weighed and mixed. The mixture of the starting materials, 70 g of ethanol, and 300 g of YSZ balls having a diameter of 5 mm were placed in a container made of zirconia and having a capacity of 500 ml and mixed for 3 hours at 250 rpm using a planetary ball mill ["Planetary Mill Pulverisette 5" (product name) manufactured by Fritsch GmbH]. The zirconia balls were separated from the mixed sample, and the thus obtained slurry was dried to obtain precursor powder of the negative-electrode active material. The precursor powder was transferred to an alumina crucible, heated to 1000°C at a heating rate of 16°C/minute in the air atmosphere, fired by being kept at the temperature for 4 hours, and cooled to room temperature through natural cooling. The obtained powder was crushed for 5 minutes using a mortar, and then filtered through a sieve having an opening size of 150 $\mu$m to obtain a crude product of the active material. 4 g of the crude product of the active material, 4 g of ethanol, and 30 g of YSZ balls having a diameter of 5 mm were placed in a container made of zirconia and having a capacity of 12.5 ml and crushed for 3 hours at 250 rpm using the planetary ball mill. The thus obtained slurry was dried under reduced pressure at 60°C overnight, whereby $AlNb_{11}O_{29}$ to be used as the negative-electrode active material was obtained.

A powder XRD pattern of the obtained negative-electrode active material was measured to confirm that the negative-electrode active material had a monoclinic crystal structure and belonged to the C2/m space group. In the negative-electrode active material, Da was 13.5 nm, Db was 82.5 nm, Db/Da [D(020)/D(200)] was 6.11, and the average particle diameter was 1.144 μm.

The negative-electrode active material, a sulfide-based solid electrolyte ($Li_{5.4}PS_{4.2}Cl_{0.8}Br_{0.8}$), and graphene (conductive aid) were mixed at a mass ratio of 60:33:7, and kneaded well to prepare a negative electrode mixture. Next, 67 mg of the negative electrode mixture was placed on the solid electrolyte layer in the powder-molding mold, and molded at a pressure of 10000 kgf/cm² using the pressing machine to form a negative electrode constituted by a molded body made of the negative electrode mixture on the solid electrolyte layer. Thus, a layered electrode body constituted by a stack of the positive electrode, the solid electrolyte layer, and the negative electrode was obtained.

<Assembly of All-Solid-State Battery>

Two flexible graphite sheets "PERMA-FOIL (product name)" (thickness: 0.1 mm, apparent density: 1.1 g/cm³) manufactured by TOYO TANSO Co., Ltd., and punched into the same size as the layered electrode body were prepared, and one of the sheets was placed on the inner bottom surface of a sealing can that was made of stainless steel and into which a ring-shaped polypropylene gasket had been fitted. Next, the layered electrode body was overlaid on the graphite sheet with the negative electrode disposed on the graphite sheet side, the other graphite sheet was placed on the layered electrode body, and covered with an exterior can made of stainless steel, and then an end portion of the opening of the exterior can was swaged inward and sealed to obtain a flat-shaped all-solid-state secondary battery having a diameter of about 9 mm and including the graphite sheets respectively located between the inner bottom surface of the sealing can and the stack and between the inner bottom surface of the exterior can and the layered electrode body.

Example 2

$Cu_{0.2}Al_{0.7}Nb_{11.1}O_{29}$ to be used as the negative-electrode active material was synthesized in the same manner as in Example 1, except that a mixture obtained by weighing and mixing 96.72 g of $Nb_2O_5$ (purity: >99.9%), 2.34 g of α-$Al_2O_3$ (purity: >99.99%), and 1.04 g of CuO (purity: >99.99%) was used as a starting material. A powder XRD pattern of the obtained negative-electrode active material was measured to confirm that the negative-electrode active material had a monoclinic crystal structure and belonged to the C2/m space group. In the negative-electrode active material, Da was 43.7 nm, Db was 96.7 nm, and Db/Da [D(020)/D(200)] was 2.21.

A flat-shaped all-solid-state secondary battery was manufactured in the same manner as in Example 1, except that the negative-electrode active material was changed to $Cu_{0.2}Al_{0.7}Nb_{11.1}O_{29}$ described above.

Example 3

$AlNb_{11}O_{29-\delta}$ to be used as the negative-electrode active material was synthesized in the same manner as in Example 1, except that firing was performed in a vacuum. Note that "$\delta$" in $AlNb_{11}O_{29-\delta}$ indicates the occurrence of oxygen deficiency, and charge compensation is achieved by the presence of $Nb^{4+}$ among $Nb^{5+}$.

A powder XRD pattern of the obtained negative-electrode active material was measured to confirm that the negative-electrode active material had a monoclinic crystal structure and belonged to the C2/m space group. In the negative-electrode active material, Da was 55.3 nm, Db was 97.1 nm, Db/Da [D(020)/D(200)] was 1.76, and the average particle diameter was 1.2507 μm.

A flat-shaped all-solid-state secondary battery was manufactured in the same manner as in Example 1, except that the negative-electrode active material was changed to $AlNb_{11}O_{29-\delta}$ described above.

Example 4

$Cu_{0.2}Al_{0.7}Nb_{11.1}O_{29-\delta}$ to be used as the negative-electrode active material was synthesized in the same manner as in Example 2, except that firing was performed in a vacuum. Note that "$\delta$" in $Cu_{0.2}Al_{0.7}Nb_{11.1}O_{29-\delta}$ indicates the occurrence of oxygen deficiency as is the case with $AlNb_{11}O_{29-\delta}$, and charge compensation is achieved by the presence of $Nb^{4+}$ among $Nb^{5+}$.

A powder XRD pattern of the obtained negative-electrode active material was measured to confirm that the negative-electrode active material had a monoclinic crystal structure and belonged to the C2/m space group. In the negative-electrode active material, Da was 20.7 nm, Db was 90.3 nm, and Db/Da [D(020)/D(200)] was 4.36.

Aflat-shaped all-solid-state secondary battery was manufactured in the same manner as in Example 1, except that the negative-electrode active material was changed to $Cu_{0.2}Al_{0.7}Nb_{11.1}O_{29-\delta}$ described above.

Comparative Example 1

$AlNb_{11}O_{29}$ to be used as the negative-electrode active material was synthesized in the same manner as in Example 1, except that firing was performed at a temperature of 1150°C.

A powder XRD pattern of the obtained negative-electrode active material was measured to confirm that the negative-electrode active material had a monoclinic crystal structure and belonged to the C2/m space group. In the negative-electrode active material, Da was 114 nm, Db was 111 nm, Db/Da [D(020)/D(200)] was 0.97, and the average particle diameter was 1.4518 μm.

Aflat-shaped all-solid-state secondary battery was manufactured in the same manner as in Example 1, except that the negative-electrode active material was changed to $AlNb_{11}O_{29}$ described above.

Comparative Example 2

$Cu_{0.2}Al_{0.7}Nb_{11.1}O_{29}$ to be used as the negative-electrode active material was synthesized in the same manner as in Example 2, except that firing was performed at a temperature of 1150°C.

A powder XRD pattern of the obtained negative-electrode active material was measured to confirm that the negative-electrode active material had a monoclinic crystal structure and belonged to the C2/m space group. In the negative-electrode active material, Da was 109 nm, Db was 142 nm, Db/Da [D(020)/D(200)] was 1.30, and the average particle diameter was 1.6115 μm.

Aflat-shaped all-solid-state secondary battery was manufactured in the same manner as in Example 1, except that the negative-electrode active material was changed to $Cu_{0.2}Al_{0.7}Nb_{11.1}O_{29}$ described above.

Load characteristics of the flat-shaped all-solid-state secondary batteries of Examples and Comparative Examples were evaluated using the following method.

Each battery was subjected to constant-current charging at a current value of 0.35 mA until the voltage reached 4.2 V, and subsequently subjected to constant-voltage charging at 4.2 V until the current value reached 0.025 mA. Thereafter, constant-current discharging was performed at a current value of 0.35 mA until the voltage reached 1.5 V. Next, each battery was subjected to constant-current charging at a current value of 1.5 mA until the voltage reached 4.2 V, and subsequently subjected to constant-voltage charging at 4.2 V until the current value reached 0.025 mA.

Next, each battery was subjected to constant-current discharging at a current value of 1.5 mA until the voltage reached 1.5 V to measure a 1.5 mA discharge capacity. Subsequently, an open-circuit voltage was measured for 1 hour, and then constant-current discharging was performed at a current value of 0.1 mA until the voltage reached 1.5 V, and a sum of a discharge capacity obtained through the 0.1 mA constant-current discharging and the 1.5 mA discharge capacity described above was taken as a 0.1 mA discharge capacity.

Charging characteristics (charging load characteristics) of the battery were evaluated by calculating a proportion of a charge capacity obtained through the constant-current charging to a total charge capacity obtained through the constant-current charging performed at the current value of 1.5 mA and the constant-voltage charging. Also, discharging characteristics (discharging load characteristics) of the battery were evaluated by calculating a value (capacity retention rate) by dividing the 1.5 mA discharge capacity by the 0.1 mA discharge capacity.

Also, the negative-electrode active material was taken out from each battery after evaluation of the load characteristics, and Da and Db were measured using the method described above to calculate Db/Da [D(020)/D(200)]. The value Db/Da of the negative-electrode active material after charging and discharging was larger than the value Db/Da of the negative-electrode active material before charging and discharging.

Compositional formulas and values Db/Da of the negative-electrode active materials are shown in Table 1, and evaluation results are shown in Table 2. In Table 2, the charging characteristics and the discharging characteristics are shown as relative values when the results of Comparative Example 2 are taken as 100.

Table 1

| | | Negative-electrode active material | | | |
| --- | --- | --- | --- | --- | --- |
| | | Compositional formula | Db/Da | Da (nm) | Db (nm) |
| | Ex. 1 | $AlNb_{11}O_{29}$ | 6.11 | 13.5 | 82.5 |
| | Ex. 2 | $Cu_{0.2}Al_{0.7}Nb_{11.1}O_{29}$ | 2.21 | 43.7 | 96.7 |
| | Ex. 3 | $AlNb_{11}O_{29-\delta}$ | 1.76 | 55.3 | 97.1 |

(continued)

| | Negative-electrode active material | | | |
|---|---|---|---|---|
| | Compositional formula | Db/Da | Da (nm) | Db (nm) |
| Ex. 4 | $Cu_{0.2}Al_{0.7}Nb_{11.1}O_{29-\delta}$ | 4.36 | 20.7 | 90.3 |
| Com. Ex. 1 | $AlNb_{11}O_{29}$ | 0.97 | 114 | 111 |
| Com. Ex. 2 | $Cu_{0.2}Al_{0.7}Nb_{11.1}O_{29}$ | 1.30 | 109 | 142 |

Table 2

| | Load characteristics | |
|---|---|---|
| | Charging characteristics | Discharging characteristics |
| Ex. 1 | 227 | 149 |
| Ex. 2 | 149 | 118 |
| Ex. 3 | 173 | 126 |
| Ex. 4 | 240 | 145 |
| Com. Ex. 1 | 85 | 94 |
| Com. Ex. 2 | 100 | 100 |

As shown in Tables 1 and 2, the flat-shaped all-solid-state secondary batteries of Examples 1 to 4 manufactured using negative electrodes that contained niobium complex oxides having appropriate values of Db/Da as the active materials obtained good evaluation results for the charging characteristics and the discharging characteristics, and had excellent load characteristics.

In contrast, the batteries of Comparative Examples 1 and 2 manufactured using negative electrodes that contained niobium complex oxides having too small values of Db/Da as the active materials were poor in both charging characteristics and discharging characteristics, and were inferior in the load characteristics.

Also, FIG. 4 shows a graph in which the horizontal axis indicates a ratio "Da/average particle diameter" between Da and the average particle diameter of the niobium complex oxide used as the negative-electrode active material and the vertical axis indicates the charging characteristics and the discharging characteristics (relative values when the results of the battery of Comparative Example 2 are taken as 100) for the batteries of Examples 1 and 3 and Comparative Examples 1 and 2.

As shown in FIG. 4, it can be found that there is a certain correlation between the ratio "Da/average particle diameter" of a niobium complex oxide and the load characteristics (charging characteristics and discharging characteristics) of a battery in which the niobium complex oxide was used as the active material. This result appears to mean that the load characteristics of a battery can be further improved as the size of a crystallite in the a-axis direction across which Li ions diffuse from the surface of an active material particle to its center becomes smaller.

Industrial Applicability

The electrochemical element according to the present invention is applicable to the same applications as those of conventionally known secondary batteries including nonaqueous electrolytes (nonaqueous electrolyte solution or gel electrolyte), all-solid-state secondary batteries, and super capacitors. The electrode for an electrochemical element according to the present invention can constitute the electrochemical element according to the present invention. The active material for an electrochemical element according to the present invention and the electrode material for an electrochemical element according to the present invention can constitute the electrode for an electrochemical element according to the present invention.

The electrochemical element according to the present invention has excellent load characteristics, and accordingly can be favorably used in applications where such characteristics are often required, such as power sources of industrial equipment and movable bodies (vehicles such as electric vehicles, hybrid cars, and electric motorcycles, ships, submarines, radio-controlled movable bodies, flying bodies such as rockets and artificial satellites, drones, etc.). There are movable bodies, such as hybrid cars, that charge batteries used therein with regenerative energy. In such a case, charging current and/or voltage may be unstable, and accordingly, dendrites of Li are likely to be generated in the battery, and this may cause degradation of the battery. However, dendrites of Li are unlikely to be generated from the niobium complex oxide used as the active material in the electrochemical element according to the present invention, and therefore, even when regenerative energy is used in charging, it is possible to suppress degradation caused by dendrites of Li and the electrochemical element can be favorably applied to movable bodies in which charging is performed in this manner.

List of Reference Numerals

| | |
|---|---|
| 1, 100 | Electrochemical element (nonaqueous electrolyte secondary battery) |
| 10 | Positive electrode |
| 20 | Negative electrode |
| 30 | Solid electrolyte layer or separator |
| 40 | Exterior can |
| 50 | Sealing can |
| 60 | Gasket |
| 200 | Electrode body |
| 300 | Positive electrode external terminal |
| 400 | Negative electrode external terminal |
| 500 | Laminate film exterior body |

**Claims**

1.  An electrode active material for an electrochemical element (1; 100),

    wherein the electrode active material is a monoclinic niobium complex oxide represented by the following general formula (1),

    $$M_xAl_{1-1.5x}Nb_{11+0.5x}O_{29-\delta} \qquad (1)$$

    wherein in the general formula (1), M is at least one element selected from Zn and Cu, and x and $\delta$ satisfy $0 \leq x \leq 0.4$ and $0 \leq \delta \leq 3$, and
    wherein the ratio Db/Da is 1.5 or more and 10 or less, where Da is a crystallite size in an a-axis direction, and Db is a crystallite size in a b-axis direction.

2.  The electrode active material for an electrochemical element (1; 100) according to claim 1, wherein the monoclinic niobium complex oxide has a $ReO_3$ crystal structure and includes a crystal phase belonging to a space group of C2/m or A2/m that has a $3 \times 4 \times \infty$ block structure or a space group of I2/m that has a $3 \times 3 \times \infty$ block structure of a crystallographic shear structure.

3.  The electrode active material for an electrochemical element (1; 100) according to claim 1 or 2, wherein the monoclinic niobium complex oxide is represented by the general formula (1), where x=0.

4.  The electrode active material for an electrochemical element (1; 100) according to claim 1 or 2, wherein the monoclinic niobium complex oxide is represented by the general formula (1), where M is Cu, and x satisfies $0 < x \leq 0.4$.

5.  The electrode active material for an electrochemical element (1; 100) according to any one of claims 1 to 4, wherein Da is 5 nm or more and 500 nm or less, and Db is 7.5 nm or more and 5000 nm or less in the monoclinic niobium complex oxide.

6.  An electrode material for an electrochemical element (1; 100), comprising the electrode active material for an electrochemical element (1; 100) according to any one of claims 1 to 5.

7.  The electrode material for an electrochemical element (1; 100) according to claim 6, further comprising a solid electrolyte.

8.  An electrode (10; 20) for an electrochemical element (1; 100), comprising the electrode active material for an electrochemical element (1; 100) according to any one of claims 1 to 5 or the electrode material for an electrochemical element (1; 100) according to claim 6 or 7.

9. An electrochemical element (1; 100) comprising:

a positive electrode (10); and
a negative electrode (20),
wherein either one of the positive electrode (10) and the negative electrode (20) is the electrode for an electrochemical element (1; 100) according to claim 8.

10. The electrochemical element (1; 100) according to claim 9, further comprising a non-aqueous electrolyte.

11. A movable body comprising the electrochemical element (1; 100) according to claim 9 or 10.

12. The movable body according to claim 11, being a vehicle such as an electric vehicle, a hybrid car, an electric motorcycle, a ship, a submarine, a flying body such as a rocket or an artificial satellite, or a drone.

13. Use of a monoclinic niobium complex oxide as an electrode active material for an electrochemical element,

wherein the monoclinic niobium complex oxide has a ratio Db/Da of 1.5 or more and 10 or less, where Da is a crystallite size in an a-axis direction, and Db is a crystallite size in a b-axis direction, and is represented by the following general formula (2),

$$Li_yM_xAl_{1-1.5x}Nb_{11+0.5x}O_{29-\delta} \qquad (2)$$

wherein in the general formula (2), M is at least one element selected from Zn and Cu, and x, $\delta$, and y satisfy $0 \leq x \leq 0,4$, $0 \leq \delta \leq 3$, and $y \leq 22$, respectively.

## Patentansprüche

1. Elektrodenaktivmaterial für ein elektrochemisches Element (1; 100),

wobei das Elektrodenaktivmaterial ein monoklines Niob-Komplexoxid ist, das durch die folgende allgemeine Formel (1) dargestellt wird,

$$M_xAl_{1-1.5x}Nb_{11+0.5x}O_{29-\delta} \qquad (1)$$

wobei in der allgemeinen Formel (1) M wenigstens ein Element ausgewählt aus Zn und Cu ist, und x und $\delta$ $0 \leq x \leq 0,4$ und $0 \leq \delta \leq 3$ erfüllen, und
wobei das Verhältnis Db/Da 1,5 oder mehr und 10 oder weniger ist, worin Da eine Kristallitgröße in a-Achsenrichtung ist, und Db eine Kristallitgröße in b-Achsenrichtung ist.

2. Elektrodenaktivmaterial für ein elektrochemisches Element (1; 100) gemäß Anspruch 1, wobei das monokline Niob-Komplexoxid eine $ReO_3$-Kristallstruktur aufweist und eine Kristallphase beinhaltet, die zur Raumgruppe C2/m oder A2/m gehört, die eine $3 \times 4 \times \infty$-Blockstruktur aufweist, oder zur Raumgruppe I2/m, die eine $3 \times 3 \times \infty$-Blockstruktur einer kristallographischen Scherstruktur aufweist.

3. Elektrodenaktivmaterial für ein elektrochemisches Element (1; 100) gemäß Anspruch 1 oder 2, wobei das monokline Niob-Komplexoxid durch die allgemeine Formel (1) dargestellt wird, worin x=0.

4. Elektrodenaktivmaterial für ein elektrochemisches Element (1; 100) gemäß Anspruch 1 oder 2, wobei das monokline Niob-Komplexoxid durch die allgemeine Formel (1) dargestellt wird, worin M Cu ist, und x $0 < x \leq 0,4$ erfüllt.

5. Elektrodenaktivmaterial für ein elektrochemisches Element (1; 100) gemäß einem der Ansprüche 1 bis 4, worin in dem monoklinen Niob-Komplexoxid Da 5 nm oder mehr und 500 nm oder weniger beträgt, und Db 7,5 nm oder mehr und 5000 nm oder weniger beträgt.

6. Elektrodenmaterial für ein elektrochemisches Element (1; 100), umfassend das Elektrodenaktivmaterial für ein elektrochemisches Element (1; 100) gemäß einem der Ansprüche 1 bis 5.

7. Elektrodenmaterial für ein elektrochemisches Element (1; 100) gemäß Anspruch 6, ferner umfassend einen Festelektrolyt.

8. Elektrode (10; 20) für ein elektrochemisches Element (1; 100), umfassend das Elektrodenaktivmaterial für ein elektrochemisches Element (1; 100) gemäß einem der Ansprüche 1 bis 5 oder das Elektrodenmaterial für ein elektrochemisches Element (1; 100) gemäß Anspruch 6 oder 7.

9. Elektrochemisches Element (1; 100) umfassend:

eine positive Elektrode (10); und
eine negative Elektrode (20),
worin die positive Elektrode (10) oder die negative Elektrode (20) die Elektrode für ein elektrochemisches Element (1; 100) gemäß Anspruch 8 ist.

10. Elektrochemisches Element (1; 100) gemäß Anspruch 9, ferner umfassend einen nicht-wässrigen Elektrolyten.

11. Mobilobjekt umfassend das elektrochemische Element (1; 100) gemäß Anspruch 9 oder 10.

12. Mobilobjekt gemäß Anspruch 11, und zwar ein Fahrzeug wie ein elektrisches Fahrzeug, ein Hybridauto, ein Elektromotorrad, ein Schiff, ein Unterseeboot, ein Flugmobil wie eine Rakete oder ein künstlicher Satellit oder eine Drohne.

13. Verwendung eines monoklinen Niob-Komplexoxids als Elektrodenaktivmaterial für ein elektrochemisches Element,

wobei das monokline Niob-Komplexoxid ein Verhältnis Db/Da von 1,5 oder mehr und 10 oder weniger aufweist, worin Da eine Kristallitgröße in a-Achsenrichtung ist, und Db eine Kristallitgröße in b-Achsenrichtung ist, und durch die folgende allgemeine Formel (2) dargestellt wird,

$$\mathrm{Li}_y\mathrm{M}_x\mathrm{Al}_{1\text{-}1.5x}\mathrm{Nb}_{11+0.5x}\mathrm{O}_{29-\delta} \qquad (2)$$

wobei in der allgemeinen Formel (2) M wenigstens ein Element ausgewählt aus Zn und Cu ist, und x, $\delta$ und y $0{\le}x{\le}0{,}4$, $0{\le}\delta{\le}3$ bzw. $y{\le}22$ erfüllen.

## Revendications

1. Matériau actif d'électrode pour un élément électrochimique (1 ; 100), dans lequel la matière active de l'électrode est un oxyde complexe de niobium monoclinique représenté par la formule générale suivante (1),

$$\mathrm{M}_y\mathrm{Al}_{1\text{-}1{,}5x}\mathrm{Nb}_{11+0{,}5}x\mathrm{O}_{29-\delta} \qquad (1)$$

dans lequel, dans la formule générale (1), M est au moins un élément choisi parmi Zn et Cu, et x et $\delta$ satisfont $0 \le x \le 0{,}4$ et $0 \le \delta \le 3$, et
dans lequel le rapport Db/Da est supérieur ou égal à 1,5 et inférieur ou égal à 10, où Da est une taille de cristallite dans la direction de l'axe a et Db est une taille de cristallite dans la direction de l'axe b.

2. Matériau actif d'électrode pour un élément électrochimique (1 ; 100) selon la revendication 1, dans lequel l'oxyde complexe de niobium monoclinique a une structure cristalline $\mathrm{ReO}_3$ et comporte une phase cristalline appartenant à un groupe d'espace C2/m ou A2/m qui a une structure de bloc $3\times4\times\infty$ ou un groupe d'espace I2/m qui a une structure de bloc $3\times3\times\infty$ d'une structure de cisaillement cristallographique.

3. Matériau actif d'électrode pour un élément électrochimique (1 ; 100) selon la revendication 1 ou 2, dans lequel l'oxyde complexe de niobium monoclinique est représenté par la formule générale (1), où x = 0.

**4.** Matériau actif d'électrode pour un élément électrochimique (1 ; 100) selon la revendication 1 ou 2, dans lequel l'oxyde complexe de niobium monoclinique est représenté par la formule générale (1), où M est Cu, et x satisfait $0 < x \leq 0,4$.

**5.** Matériau actif d'électrode pour un élément électrochimique (1 ; 100) selon l'une quelconque des revendications 1 à 4, dans lequel Da est égal ou supérieur à 5 nm et inférieur ou égal à 500 nm, et Db est égal ou supérieur à 7,5 nm et inférieur ou égal à 5000 nm dans l'oxyde complexe de niobium monoclinique.

**6.** Matériau d'électrode pour un élément électrochimique (1 ; 100), comprenant le matériau actif de l'électrode pour un élément électrochimique (1 ; 100) selon l'une quelconque des revendications 1 à 5.

**7.** Matériau d'électrode pour un élément électrochimique (1 ; 100) selon la revendication 6, comprenant en outre un électrolyte solide.

**8.** Électrode (10 ; 20) pour un élément électrochimique (1 ; 100), comprenant le matériau actif de l'électrode pour un élément électrochimique (1 ; 100) selon l'une quelconque des revendications 1 à 5 ou le matériau d'électrode pour un élément électrochimique (1 ; 100) selon la revendication 6 ou 7.

**9.** Élément électrochimique (1 ; 100) comprenant :

une électrode positive (10) ; et
une électrode négative (20),
dans lequel l'une ou l'autre de l'électrode positive (10) et de l'électrode négative (20) est l'électrode d'un élément électrochimique (1 ; 100) selon la revendication 8.

**10.** Élément électrochimique (1 ; 100) selon la revendication 9, comprenant en outre un électrolyte non aqueux.

**11.** Corps mobile comprenant l'élément électrochimique (1 ; 100) selon la revendication 9 ou 10.

**12.** Corps mobile selon la revendication 11, étant un véhicule tel qu'un véhicule électrique, une voiture hybride, une moto électrique, un navire, un sous-marin, un corps volant tel qu'une fusée ou un satellite artificiel, ou un drone.

**13.** Utilisation d'un oxyde complexe de niobium monoclinique comme matériau actif d'électrode pour un élément électrochimique,

dans laquelle l'oxyde complexe de niobium monoclinique a un rapport Db/Da de 1,5 ou plus et de 10 ou moins, où Da est une taille de cristallite dans la direction de l'axe a, et Db est une taille de cristallite dans la direction de l'axe b, et est représenté par la formule générale suivante (2),

$$Li_yM_xAl_{1-1.5x}Nb_{11+0.5x}O_{29-\delta} \qquad (2)$$

dans laquelle, dans la formule générale (2), M est au moins un élément choisi parmi Zn et Cu, et x, $\delta$, et y satisfont $0 \leq x \leq 0,4$, $0 \leq \delta \leq 3$, et $y \leq 22$, respectivement.

FIG. 1

FIG. 2

FIG. 3

FIG. 4

**EP 4 292 984 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016177972 A
- JP 2019057371 A
- WO 2020070958 A
- WO 2020070955 A

**Non-patent literature cited in the description**

- *Journal of the American Chemical Society*, 2019, vol. 141, 16706-16725